# EUROPEAN PATENT APPLICATION

(11) **EP 0 679 520 A2**
(43) Date of publication of application: **02.11.1995**
(21) Application number: 95200921.5
(22) Date of filing: 12.04.1995
(51) Int. Cl.: B41J 2/45, H04N 1/06

(54) **Multi-position lens assembly apparatus for exposing photosensitive media in a rotary printer**

(30) Priority: 29.04.1994 US 236727
(71) Applicant: EASTMAN KODAK COMPANY, Rochester, New York 14650-2201 (US)
(72) Inventor: Kiesow, Ronald Herbert, c/o Eastman Kodak Company, Rochester, New York 14650-2201 (US)
(74) Representative: Blickle, K. Werner, Dipl.-Ing.

(57) **Abstract**

A multi-position lens enables the use of photosensitive media of multiple thicknesses in the printer, while utilizing the same projection optics. A printer includes a support (22) which receives and holds print media in a cylindrical shape in a manner that the outer surface of the print media is fixed, while the position of the inner surface of the print media varies with the thickness of the received print media. A rotor (11) is mounted for simultaneous rotation within, and linear translation along the axis of, the cylindrical shape of received print media. A write head assembly (32) on the rotor includes a light source, projection optics adapted to focus light from the source onto the inner cylindrical surface of received media, and apparatus for adjusting the focus of the projection optics so that the inner surface of received print media can be kept in focus for different thicknesses of print media light source. The projection optics is adapted to simultaneously focus light from the light source onto the inner cylindrical surface of received media.

## Description

### BACKGROUND OF THE INVENTION

### Technical Field

This invention relates generally to the field of electronic printing of digitized images and, specifically, to electronic printing systems that utilize a rotor with a multiple light source write head to record information by scanning photosensitive media.

### Background Art

Photographic printing of digitized images is accomplished by modulating the intensity of a light beam that forms a writing spot on photosensitive media as the beam moves relative to the photosensitive media. One common motion pattern moves the light beam rapidly along a single line as a single row of image pixels and the light beam is modulated with "clocked out" image information starting from a fixed margin location on a page. The beam or the media is then indexed to the next line of the page and the beam is returned to the margin before writing the next row of pixels.

One such printer using lasers is disclosed in U.S. Patent No. 5,026,133 which illustrates a system for printing photographic images from digitized data that utilizes a laser beam to write on a photographic media. The laser beam is incident on a pentaprism that is rotated within a support cylinder by a drive motor. The pentaprism reflects the laser beam to a surface of photographic media retained within the support cylinder. The pentaprism and associated drive motor are mounted on a lead screw which is turned by an index motor. The movement of the lead screw causes the pentaprism to be indexed to the next line location.

Another example of a printer using lasers for digitally writing on photosensitive media is disclosed in U.S. Patent No. 4,479,133 which discloses a rotating print head which scans the photosensitive media on a stationary print shoe. The rotating head carries four laser beam-projecting sections equally spaced about the periphery of the head. Each of the sections comprises four laser projecting systems for projecting four spaced beams of light onto the photosensitive media.

Both of the foregoing patents disclose the use of laser light sources which are more expensive than other light sources, thus reducing their economic viability in the marketplace. Moreover, unless bulky, expensive gas lasers are used, which require complex and expensive control and operational circuitry, it is still not possible to produce full color photographs on conventional photographic paper. This is because diode lasers are not yet available which can produce all of the colors necessary to produce color photographs using standard color photographic materials such as paper and film.

In order to reduce the expense of electronic printing systems, the lasers and the pentaprism can be replaced by an array of light emitting diodes (LED's) positioned on a rotor which spins within a media support cylinder. The rotor is axially translated through the support cylinder, as in the case of the pentaprism in the system described above, to index the LED array to the next image line or lines. The light emitting diodes can be directly modulated with relatively simple electronic drive circuitry, and can be employed with relatively inexpensive, compact and reliable hardware. However, unlike laser light sources, LED's emit incoherent light which is not readily collimated and which provides relatively low efficiency with the use of prior art rotating multifaceted mirrors and galvanometer-driven mirrors to deliver and scan the light onto the media. The efficiency of the delivery of the light energy to the photosensitive media is improved by use of a high numerical aperture collection and delivery system in close proximity to the photosensitive material and predicates the present scanning method instead of the prior art.

### DISCLOSURE OF THE INVENTION

It is an object of the present invention to provide projection optics that enables the use of photosensitive media of multiple thicknesses in a rotary printer.

It is an object of the present invention to provide projection optics in a rotary printer wherein the projection optics can be re-focused relative to the shoe to enable the use of photosensitive media of multiple thicknesses while using the same lens assembly.

The multi-position lens construction according to the present invention enables the use of photosensitive media of multiple thicknesses in the printer, while utilizing the same projection optics. A printer includes a support which receives and holds print media in a cylindrical shape in a manner that the outer surface of the print media is fixed, while the position of the inner surface of the print media varies with the thickness of the received print media. A rotor is mounted for simultaneous rotation within, and linear translation along the axis of, the cylindrical shape of received print media. A write head assembly on the rotor includes a light source, projection optics adapted to focus light from the source onto the inner cylindrical surface of received media, and apparatus for adjusting the focus of the projection optics so that the inner surface of received print media can be kept in focus for different thicknesses of print media.

According to a preferred embodiment of the present invention, the light source comprises an LED array having a plurality of individually addressable mono-color LED's arranged in columns and rows. The projection optics is adapted to simultaneously focus light from the LED array onto the inner cylindrical surface of received media. The support is preferably a stationary cylindrical shoe having an inner surface against which the outer surface of the print media is held in a cylindrical shape in a manner that the outer surface of the print media is fixed against the inner surface of the shoe, while the inner surface of received print media varies with the thickness of the received print media.

The invention, and its objects and advantages, will become more apparent in the detailed description of the preferred embodiments presented below.

### BRIEF DESCRIPTION OF THE DRAWINGS

In the detailed description of the preferred embodiments of the invention presented below, reference is made to the accompanying drawings, in which:
Figure 1 is a perspective view of a rotary printing system that utilizes an LED projection lens assembly positioned in a printhead assembly according to the present invention;
Figure 2 is an exploded perspective view of a rotor of the printhead assembly shown in Figure 2;
Figure 3 is a greatly enlarged perspective view of a rotor and projection lens assembly;
Figure 4 is an exploded perspective view of a multi-position lens assembly according to the present invention;
Figure 5 is a view of the assembled lens assembly without its cover; and
Figure 6 is a view similar to Figure 5 with the cover in place.

### BEST MODE FOR CARRYING OUT THE INVENTION

The present description will be directed in particular to elements forming part of, or cooperating more directly with, apparatus in accordance with the present invention. It is to be understood that elements not specifically shown or described may take various forms well known to those skilled in the art.

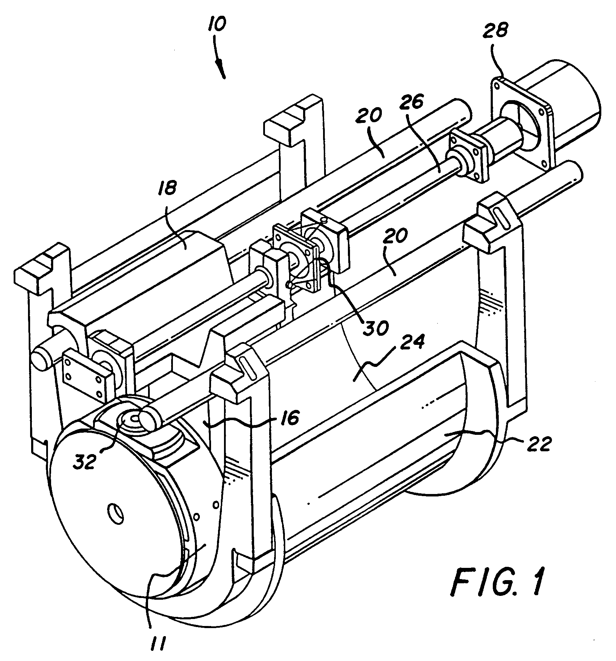

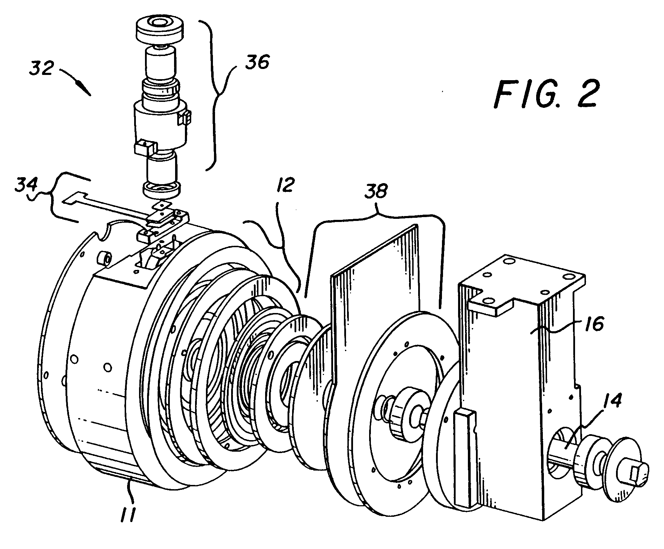

A rotary printing system 10 employing a multi-position lens assembly according to the present invention is illustrated in Figures 1 and 2, and includes a rotor 11 coupled to a drive motor 12 via a drive shaft 14. Drive shaft 14 is supported by a support pedestal structure 16 which hangs from a translator base 18 which is supported for movement along a pair of guide rails 20. The rotor is arranged to spin and move axially within a stationary cylindrical print shoe 22 which is provided with a sheet of photosensitive material 24 on the inner surface thereof. Rotor 11 is attached to a linear translation assembly comprising pedestal structure 16 and translator base 18, and a lead screw mechanism 26 driven by a stepper motor 28, with the lead screw being connected to translator base 18 by a coupling 30. The rotor is simultaneously rotated by drive motor 12 in a fast scan direction and is translated past the stationary print shoe in the slow scan direction (axially) by stepper motor 12, lead screw 26 and coupling 30, thereby achieving a raster scan pattern on the photosensitive media held within the print shoe.

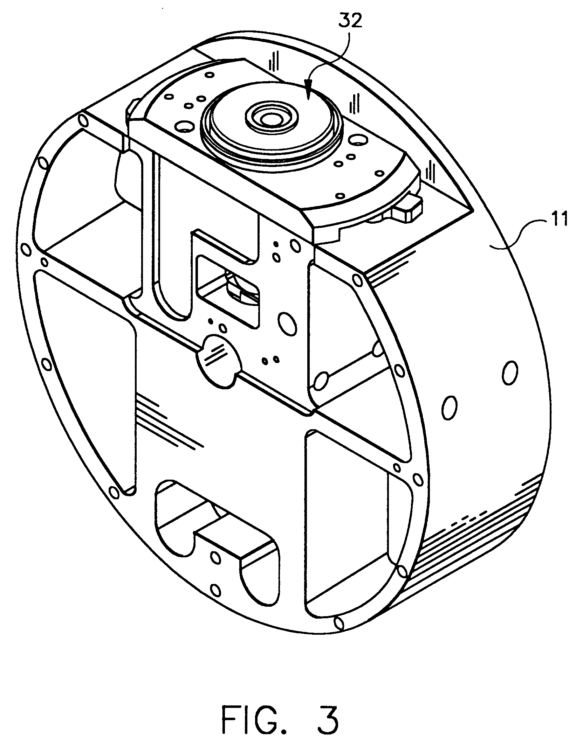

An LED printhead assembly 32 is mounted in rotor 11 and comprises a plurality of mono-color light sources such as an array of LED's 34 and a projection lens assembly 36. The printhead assembly is located within the body of the rotor, as shown in Figures 2 and 3, with the LED array package positioned so that the LED aperture output surface is located in a plane which is perpendicular to the optical axis of the projection lens assembly. The projection lens assembly is arranged to simultaneously image (focus) all of the LED's in the array onto a surface located in close proximity above the outer surface of the rotor, and more particularly, onto the inner surface of the photosensitive material held by print shoe 22. A single projection optics lens array thereby images (focuses) the plurality of LED's onto the photosensitive material as a plurality of individual images which constitute the writing beams that expose the image pixels.

LED array 34 described herein is arranged to generate a continuous-tone, full-color image from a digital input signal. The LED array of the preferred embodiment comprises, say, twelve individual LED's arranged in three columns of four LED's per column. The columns are arranged substantially parallel to the fast scan direction of movement of the rotor, i.e. the rotation of the rotor. In the preferred embodiment, the three columns each correspond to red, green and blue LED's, respectively. Thus, the first column contains four red LED's, the second column contains four green LED's, and the third column contains four blue LED's, with the columns of light sources, and the lines of images produced thereby, being substantially parallel and spaced in the slow scan direction of movement of the rotor.

The LED array is positioned within the body of rotor 11 such that optical radiation from each individual LED is collected and conveyed to form a separate and distinct writing spot on stationary photosensitive material 24 located in close proximity to the circumferential surface of the rotor. This is accomplished by projection lens assembly 36 optical elements such as disclosed in the above-identified Palum application.

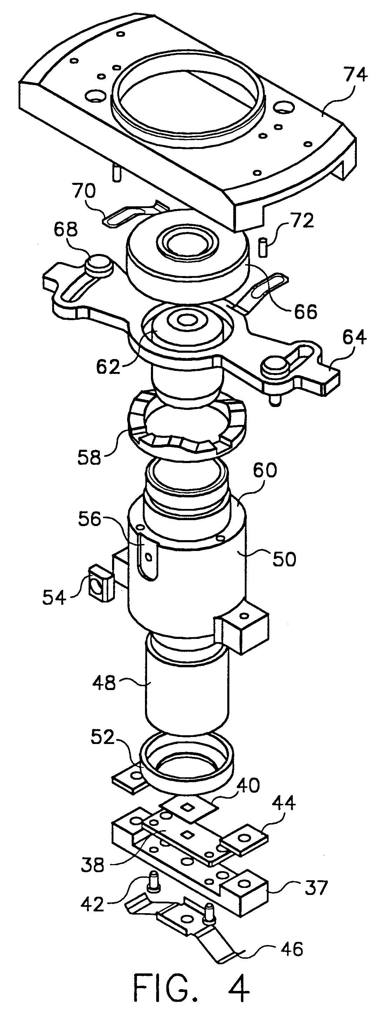

With reference to Figures 4-6, projection lens assembly 32 includes an LED mounting block 37 notched to receive an LED package 38 and a glass cover 40. The LED package is located in mounting block 37 by a pair of pins 42. The mounting block is positioned by means of shims 44 and an actuation spring 46 which is always engaged to apply a vertical (as illustrated in Figure 4) force on the lens assembly.

A lower lens 48 is retained on a lens housing 50 by a ring 52. The lens housing is non-rotatably aligned in rotor 11 (Figure 2) by way of a locating key 54 and a slot 56. A lens position cam plate 58 is non-rotationally received on a shoulder 60 of lens housing 50. The cam plate has a repeating series of cam lobes.

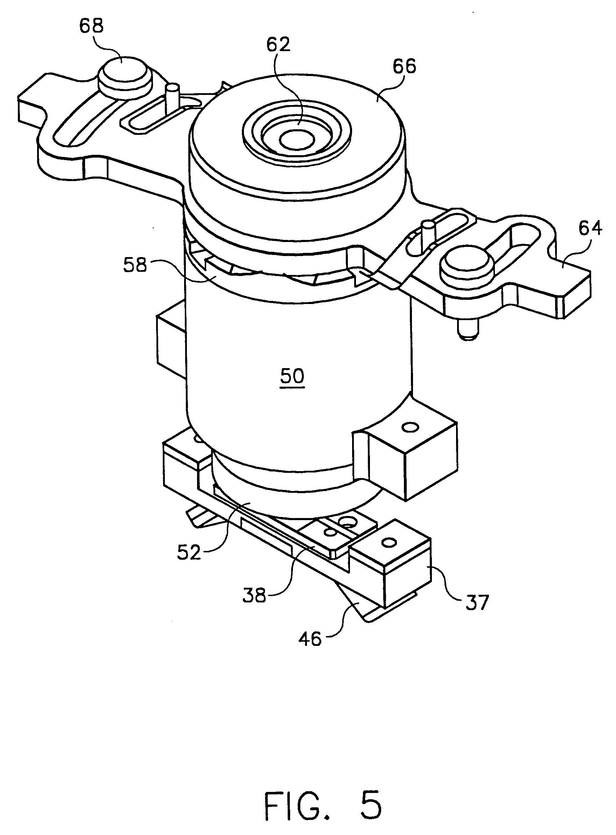

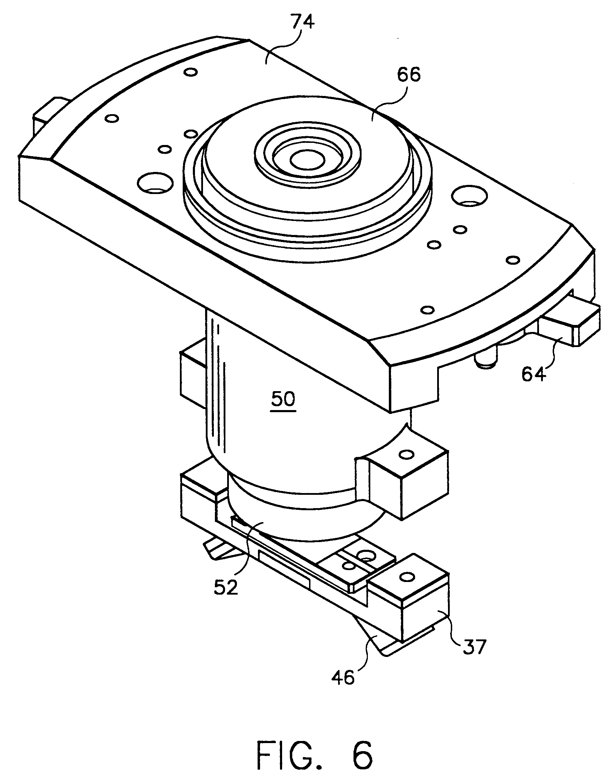

An upper lens 62 is retained in a plate 64 by a lens retaining ring 66. Retaining plate 64 has a limited degree of rotational freedom in rotor 11 as defined by a pair of shoulder studs 68 and associated curved slots in the retaining plate. A pair of spring detents 70, held by dowels 72, releasably oppose such rotation. Figure 5 is a view of the assembled lens assembly without a cover 74, while Figure 6 shows the cover in place.

The multi-position lens construction according to the present invention enables the use of photosensitive media of multiple thicknesses in the printer, while utilizing the same lens assembly. When printing, it may be desirable to change media. If the new media is not the same thickness as the one previously being used, the variation in media thickness requires a different lens and sensor position to maintain the optimum focus and quality of the finished print. The multi-position lens assembly described above enables the operator to easily relocate the lens and sensor.

By rotating retaining plate 64 using the two tabs that extend radially from cover 74 (see Figure 6), cam follower surfaces on the bottom of the retaining plate align with different lobes on cam 58, thereby causing a change in the lens and sensor position. Actuation spring 46 applies a vertical force on the lens assembly to insure its proper positioning. Each positional change of lens housing 50 allows the use of a different medial thickness without requiring the lens assembly to be replaced.

The invention has been described in detail with particular reference to preferred embodiments thereof, but it will be understood that variations and modifications can be effected within the spirit and scope of the invention.

## Claims

1. A printer having a support (22) adapted to receive and hold print media (24) in a cylindrical shape in a manner that the outer surface of received print media is fixed, while the inner surface of received print media varies with the thickness of the received print media, a rotor (11) that is mounted for simultaneous rotation within, and linear translation along the axis of, the cylindrical shape of received print media, and a write head assembly (32) on the rotor, said write head assembly including a light source, projection optics adapted to focus light from the source onto the inner cylindrical surface of received media; characterized by means (58-70) for adjusting the focus of the projection optics so that the inner surface of received print media can be kept in focus for different thicknesses of print media.

2. A printer as set forth in Claim 1 wherein said projection optics is adapted to simultaneously focus light from an LED array (34) onto the inner cylindrical surface of received media (24).

3. A printer as set forth in Claim 1 further characterized by: said projection optics including a lens system having an optical axis, said lens system including a lens element movable along the optical axis to change the focus of the projection optics, and means for moving the lens element so that the inner surface of received print media can be kept in focus for different thicknesses of print media.

4. A printer as set forth in Claim 3 wherein said moving means includes a cam and follower.

5. A printer as set forth in Claim 3 wherein said moving means includes a circular cam and follower adapted to move the lens element along the optical axis upon rotation of one of said circular cam and follower.
